# EUROPÄISCHE PATENTANMELDUNG

(11) **EP 2 626 200 A1**
(43) Veröffentlichungstag der Anmeldung: **14.08.2013**
(21) Anmeldenummer: 12154516.4
(22) Anmeldetag: 08.02.2012
(51) Int. Cl.: B32B 5/06, B32B 5/12, D04H 3/04, D04H 3/115, D04H 3/105, D04H 5/02, B32B 5/26, B32B 5/08, B32B 27/12, B32B 27/32, B32B 27/34, B29C 70/16, B29C 70/40

(54) **Flächiger Verbundwerkstoff**

(71) Anmelder: Quadrant Plastic Composites AG, 5600 Lenzburg (CH)
(72) Erfinder: Die Erfindernennung liegt noch nicht vor
(74) Vertreter: Schmauder & Partner AG Patent- & Markenanwälte VSP

(57) **Zusammenfassung**

Die Erfindung betrifft einen flächigen Verbundwerkstoff, umfassend mindestens eine Schicht A aus einem Thermoplast-Faservlies oder einer Thermoplastfolie und mindestens zwei unidirektionale Fasergelege-Schichten B und B', wobei die Schichten B und B' eine bidirektionale Faserorientierung aufweisen. Die Schichten sind sowohl miteinander vernäht als auch genadelt.

## Beschreibung

Die Erfindung betrifft einen flächigen Verbundwerkstoff, umfassend
- mindestens eine Schicht A aus einem Faservlies, bestehend aus 40 bis 100 Gew.-% Thermoplastfasern und 60 bis 0 Gew.-% Verstärkungsfasern, oder aus einer Thermoplastfolie, sowie
- mindestens zwei unidirektionale Schichten B und B' aus parallelen Verstärkungsfasern, wobei die Schichten B und B' eine bidirektionale Faserorientierung aufweisen.

Thermoplastische Kunststoffe werden wegen ihres geringen Gewichts in zunehmendem Masse zur Herstellung von Formteilen, insbesondere von Bauteilen für Kraftfahrzeuge verwendet. Um ihnen eine ausreichende Festigkeit und Steifigkeit zu verleihen, werden sie gewöhnlich mit Verstärkungsfasern verbunden. So werden zum Beispiel flächige Halbzeuge aus glasmattenverstärkten Thermoplasten hergestellt durch Zusammenführen von Endlos-Glasfasermatten mit Wirrfasern und Thermoplast-Schmelzebahnen und Konsolidieren auf einer Doppelbandpresse. Aus dem erhaltenen flächigen Halbzeug können durch Heissverpressen in einer Form Bauteile hergestellt werden. Dabei ist jedoch die Faserverstärkung ungerichtet, d.h., sie wirkt gleichmässig in allen Richtungen ohne Vorzugsrichtung, so dass die Festigkeit solcher Verbunde limitiert ist. In vielen Fällen benötigt man jedoch Bauteile, die in Vorzugsrichtungen verstärkt sind. Dies kann man dadurch erreichen, dass als Verstärkungsfasern Fasergewebe oder Fasergelege aus parallelen Faserbündeln (Rovings) verwendet werden. So ist beispielsweise in der WO 2006/111037 ein flächiger Verbundwerkstoff beschrieben, der eine Faservlies-Schicht aus Thermoplastfasern und eine Gewebe- oder Gelege-Schicht aus parallelen Verstärkungsfaserbündeln enthält. Die einzelnen Schichten können entweder zusammengenadelt, zusammengenäht oder thermisch miteinander verbunden werden. Dieser Verbundwerkstoff kann durch Heissverpressen zu Bauteilen mit gezielter Verstärkung verarbeitet werden.

Beim Nadeln werden die Faserbündel geöffnet und die Fasern werden teilweise gebrochen. Dabei werden aber die Einzelfasern etwas gegeneinander verschoben, so dass die Orientierung teilweise aufgehoben und die Verstärkungswirkung vermindert wird. Beim Vernähen werden die einzelnen Faserbündel durch Bindefäden miteinander und mit den Fasern der Vliesschicht verbunden. Dabei werden aber die Faserbündel nicht geöffnet, so dass die Thermoplast-Schmelze die Gewebe- bzw. Gelege-Schicht nur unvollständig tränken kann, was zu geringerer Tragfähigkeit daraus hergestellter Bauteile führt.

Der Erfindung lag daher die Aufgabe zugrunde, mit Fasergelegen verstärkte Verbundwerkstoffe bereitzustellen, die die jeweiligen genannten Nachteile nicht aufweisen. Eine weitere Aufgabe bestand darin, flächige Verbundwerkstoffe bereitzustellen, die eine Verstärkung in mehreren Richtungen aufweisen, aus denen Bauteile mit einer bidirektionalen Verstärkung hergestellt werden können.

Letzteres wird im Prinzip auch mit den Verbundwerkstoffen nach WO 2006/111307 erreicht, wenn zur Verstärkung ein Fasergewebe eingesetzt wird. Bei Geweben sind jedoch die Faserbündel an den Kreuzungspunkten onduliert, was zu einer Verminderung der Druckfestigkeit in Faserrichtung führt. Ausserdem befindet sich an den Kreuzungspunkten zwischen den Faserbündeln kein Thermoplast. Diese Trockenstellen haben eine ungleichmässige Tränkung zur Folge. Auch diese Nachteile sollten durch die vorliegende Erfindung vermieden werden.

Gegenstand der Erfindung ist somit ein flächiger Verbundwerkstoff, umfassend
- mindestens eine Schicht A aus einem Faservlies, bestehend aus 40 bis 100 Gew.-% Thermoplastfasern und 60 bis 0 Gew.-% Verstärkungsfasern, oder einer Thermoplastfolie, sowie
- mindestens zwei unidirektionalen Fasergelege-Schichten B und B' aus parallelen Verstärkungsfaserbündeln, wobei die Schichten B und B' eine bidirektionale Faserorientierung aufweisen.

Erfindungsgemäss sind beim Verbundwerkstoff die Schichten sowohl miteinander vernäht als auch genadelt.

Vorzugsweise enthält das Faservlies der Schicht A bis zu 50 Gew.-%, in vielen Fällen jedoch gar keine Verstärkungsfasern.

"Bidirektional" bedeutet im Zusammenhang mit zwei Fasergelegen B und B', dass die Längsachse des Fasergeleges B nicht parallel zu der Längsachse des Fasergeleges B' ist.

Ein weiterer Gegenstand der Erfindung sind Verfahren zur Herstellung derartiger Verbundwerkstoffe. Dabei gibt es zwei Varianten:
Bei der ersten Variante werden zunächst die Faservlies-Schicht(en) A nach dem Krempel-, Airlay- oder Spinnvlies-Verfahren hergestellt, dann werden die bidirektional zueinander ausgerichteten Gelege-Schichten B und B' mit der bzw. den Schicht(en) A kontinuierlich zusammengeführt. Die Schichten werden dann miteinander vernäht und anschliessend genadelt.

Bei der zweiten Variante werden die Thermoplastfolie(n) der Schicht A und die bidirektional zueinander ausgerichteten Fasergelege der Schichten B und B' kontinuierlich zusammengeführt, miteinander vernäht und anschliessend genadelt.

Bevorzugte Schichtanordnungen sind B - A - B' und B - A - B' - A - B. Weitere Anordnungen mit mehreren, bis zu 20 Schichten sind möglich. Es ist bevorzugt, dass immer eine Faservlies- bzw. Thermoplastfolien-Schicht A zwischen zwei Gelege-Schichten B bzw. B' angeordnet ist. Für spezielle Anwendungen ist auch eine Anordnung, bei der eine Schicht A aussen liegt, möglich.

Die Faserorientierung der Schichten B bzw. B' ist bidirektional, bevorzugte Orientierungen sind 0°/ 90°, 30°/ -30°, 45°/ -45° und 60°/ -60° gegenüber einer Referenzrichtung der Schichtanordnung wie beispielsweise deren Längsachse L. Die Schichtenlagen sind dabei vorzugsweise symmetrisch anzuordnen.

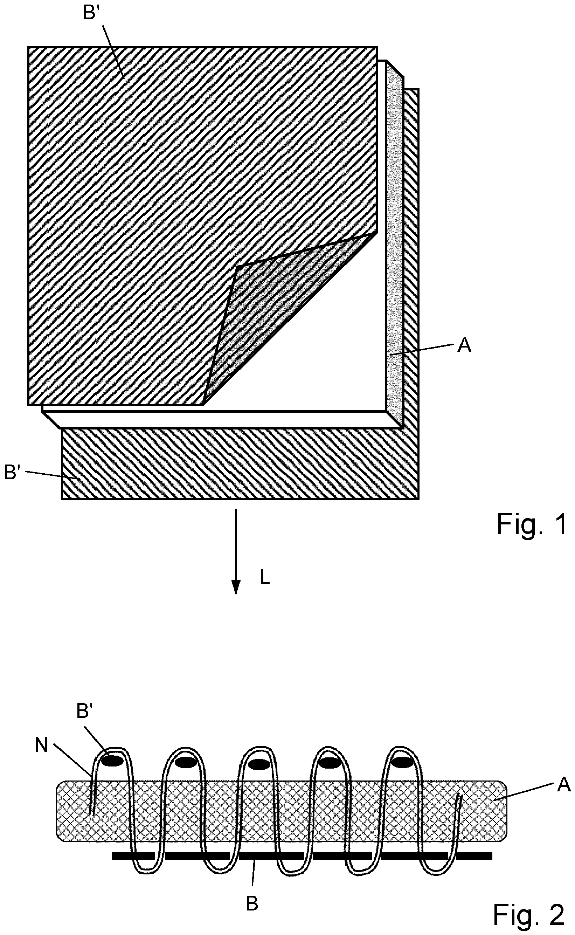

Die Figur 1 zeigt in perspektivischer Ansicht eine Schichtanordnung B - A - B' mit einer bidirektionalen Faserorientierung 45°/ -45° der Schichten B bzw. B' gegenüber einer Längsachse L.

Die Flächengewichte der einzelnen Schichten liegen vorzugsweise zwischen 30 und 1000 g/m², insbesondere zwischen 150 und 300 g/m². Die einzelnen Gelege-Schichten können auch unterschiedliche Flächengewichte aufweisen. Die Flächengewichte sind so auszuwählen, dass der Anteil der gesamten Verstärkungsfasern im Verbundwerkstoff vorzugsweise 20 bis 80 Gew.-%, insbesondere 30 bis 70 Gew.-% und besonders bevorzugt etwa 60 Gew.-% beträgt.

Bevorzugte Verstärkungsfasern sind Glasfasern und Kohlenstofffasern, daneben sind auch Aramidfasern, Basaltfasern, Naturfasern, und Fasern aus höher schmelzenden Polymeren sowie Hybridfasern, z.B. aus Glasfasern und Polypropylenfasern geeignet. Vorzugsweise sind die Faserarten in den einzelnen Schichten jeweils gleich. Die Verstärkungsfasern des Geleges liegen vorzugsweise als Faserbündel mit einem Titer zwischen 300 und 4'800 tex vor.

Bevorzugte Thermoplasten in dem Faservlies bzw. in der Thermoplastfolie sind Polypropylen und Polyamide, daneben sind auch andere Thermoplasten, wie Polyester, Polyethersulfon, Polyetherketone und Polyetherimid geeignet. Verbundwerkstoffe mit besonders guter Fliessfähigkeit werden erhalten, wenn der Thermoplast Polypropylen mit einem Schmelzflussindex (melt flow index, MFI) (230°C, 2.16 kp) zwischen 10 und 400, insbesondere bei etwa 120 g/10 min ist.

Die einzelnen Schichten des Verbundwerkstoffs sind sowohl miteinander vernäht als auch genadelt.

Beim Nähen werden die Faserbündel des Geleges miteinander durch einen Nähfaden verbunden, welcher Maschen bildet. Dadurch werden die Verstärkungsfasern in ihrer parallelen Orientierung fixiert. Geeignete Nähfäden können aus Glas, Polypropylen, Polyamid, sowie aus PET gebildet sein. Auch Acetat- und Viskosefäden können verwendet werden.

Vorzugsweise sind die Nähfäden aus demselben Thermoplasten gebildet wie die Thermoplastfasern bzw. die Thermoplastfolie der Schicht A, vorzugsweise also aus Polypropylen bzw. Polyamid.

Die Figur 2 zeigt die Schichtanordnung B - A - B' der Figur 1 in einem Querschnitt entlang der Faserorientierung der Schicht B nach dem Vernähen. Der Nähfaden N verbindet dabei die Faserbündel der Schichten B' und B. In der Folge wird diese Schichtanordnung noch genadelt.

Durch das Nadeln werden, wie bereits ausgeführt, die Faserbündel geöffnet und die Fasern werden teilweise gebrochen. Ausserdem werden durch die Widerhaken der Nadeln Thermoplastfasern aus dem Vlies in das Gelege hineingezogen. Ähnliches passiert auch beim Nadeln der Thermoplastfolie, wo durch die Widerhaken Bruchstücke bzw. Fäden aus der Folie herausgerissen und in das Gelege hinein gezogen werden. Das Nadeln kann auf üblichen Nadelstühlen mit Filznadeln vorgenommen werden. Die Zahl der Nadelstiche kann zwischen 5 und 100 pro cm², insbesondere zwischen 20 und 40 Einstiche pro cm² liegen.

Dies alles hat zur Folge, dass die Thermoplast-Schmelze aus dem Faservlies bzw. der Thermoplastfolie beim anschliessenden Heissverpressen in die Gelege-Schichten eindringen und diese gleichmässig tränken kann. Wenn der Nähfaden aus demselben Thermoplasten besteht, verschmilzt er beim Heissverpressen ebenfalls; er ist danach ohnehin nicht mehr erforderlich.

Dadurch, dass die Faserbündel zusätzlich miteinander vernäht sind, behalten sie beim Nadeln ihre Orientierung bei, und da durch das Nähen auch die Gelege-Schicht mit der Faservlies-Schicht bzw. mit der Thermoplastfolie verbunden ist, besteht auch nicht die Gefahr, dass die Schichten beim Transport und bei der späteren Weiterverarbeitung verrutschen.

Die erfindungsgemässen flächigen Verbundwerkstoffe können bei Temperaturen oberhalb des Erweichungsbereichs des Thermoplasten in Formen direkt zu dreidimensionalen Bauteilen verpresst werden, oder sie können durch Heissverpressen, z.B. in einer Doppelbandpresse, zu flächigen Halbzeugen, vorzugsweise mit einer Dicke von 0.5 bis 5 mm, konsolidiert werden.

## Patentansprüche

1. Flächiger Verbundwerkstoff, umfassend
- mindestens eine Schicht A aus einem Faservlies, bestehend aus 40 bis 100 Gew.-% Thermoplastfasern und 60 bis 0 Gew.-% Verstärkungsfasern, oder aus einer Thermoplastfolie, sowie
- mindestens zwei unidirektionale Fasergelege-Schichten B und B' aus parallelen Verstärkungsfaserbündeln, wobei die Schichten B und B' eine bidirektionale Faserorientierung aufweisen,
**dadurch gekennzeichnet, dass** die Schichten sowohl miteinander vernäht als auch genadelt sind.

2. Verbundwerkstoffstoff nach Anspruch 1, **dadurch gekennzeichnet, dass** die Schichtanordnung B - A - B' oder B - A - B' - A - B ist.

3. Verbundwerkstoff nach Anspruch 1 oder 2, **dadurch gekennzeichnet, dass** die Faserorientierung der Schichten B und B' bezüglich einer Referenzrichtung des Verbundwerkstoffs 0° 190°,30°1 -30°, 45°/ -45° oder 60°/ -60° ist.

4. Verbundwerkstoff nach einem der Ansprüche 1 bis 3, **dadurch gekennzeichnet, dass** die Flächengewichte der einzelnen Schichten jeweils 20 bis 1'000 g/m² betragen.

5. Verbundwerkstoff nach einem der Ansprüche 1 bis 4, **dadurch gekennzeichnet, dass** der Anteil der gesamten Verstärkungsfasern im Verbundwerkstoff 20 bis 80 Gew.-% beträgt.

6. Verbundwerkstoff nach einem der Ansprüche 1 bis 5, **dadurch gekennzeichnet, dass** die Verstärkungsfasern Glasfasern oder Kohlenstofffasern sind.

7. Verbundwerkstoff nach einem der Ansprüche 1 bis 6, **dadurch gekennzeichnet, dass** die Thermoplastfasern bzw. die Thermoplastfolie der Schicht A aus Polypropylen gebildet sind.

8. Verbundwerkstoff nach Anspruch 7, **dadurch gekennzeichnet, dass** die Nähfäden aus einem Polypropylen gebildet sind.

9. Verbundwerkstoff nach einem der Ansprüche 1 bis 6, **dadurch gekennzeichnet, dass** die Thermoplastfasern bzw. die Thermoplastfolie der Schicht A aus einem Polyamid gebildet sind.

10. Verbundwerkstoff nach Anspruch 9, **dadurch gekennzeichnet, dass** die Nähfäden aus einem Polyamid gebildet sind.

11. Verfahren zur Herstellung des Verbundwerkstoffs nach Anspruch 1, **dadurch gekennzeichnet, dass** zunächst die Faservlies-Schicht(en) A nach dem Krempel-, Airlay- oder Spinnvlies-Verfahren hergestellt werden, und dass dann kontinuierlich die Gelege-Schichten B und B' mit der bzw. den Faservlies-Schicht(en) A zusammengeführt werden, dann die Schichten miteinander vernäht und anschliessend genadelt werden.

12. Verfahren zur Herstellung des Verbundwerkstoffs nach Anspruch 1, **dadurch gekennzeichnet, dass** die Thermoplastfolie(n) der Schicht A und die Gelegeschichten B und B' kontinuierlich zusammengeführt werden, dann die Schichten miteinander vernäht und anschliessend genadelt werden.

13. Verwendung des Verbundwerkstoffs nach einem der Ansprüche 1 bis 10 zur Herstellung von dreidimensionalen Bauteilen durch Heissverpressen in einer Form.

14. Verwendung des Verbundwerkstoffs nach einem der Ansprüche 1 bis 10 zur Herstellung eines flächigen Halbzeugs einer Dicke von 0.5 bis 5 mm durch Heissverpressen in einer Doppelbandpresse.
